# EUROPÄISCHE PATENTSCHRIFT

(11) **EP 4 409 127 B1**
(45) Veröffentlichungstag und Bekanntmachung des Hinweises auf die Patenterteilung: **10.09.2025**
(21) Anmeldenummer: 22838753.6
(22) Anmeldetag: 14.12.2022
(51) Int. Cl.: F02M 21/02, F02M 61/08, F02M 63/00

(54) **INJEKTOR ZUM EINSPRITZEN VON KRAFTSTOFF**
INJECTOR FOR INJECTING FUEL
INJECTEUR D'INJECTION DE CARBURANT

(30) Priorität: 15.12.2021 DE 102021133210
(43) Veröffentlichungstag der Anmeldung: 07.08.2024
(73) Patentinhaber: Liebherr-Components Deggendorf GmbH, 94469 Deggendorf (DE)
(72) Erfinder: SEIDL, Martin, 94469 Deggendorf (DE)
(74) Vertreter: Laufhütte, Dieter
(86) Internationale Anmeldenummer: PCT/EP2022/085910
(87) Internationale Veröffentlichungsnummer: WO 2023/111047

(56) Entgegenhaltungen:
- EP-A1- 2 602 476
- WO-A1-2019/072793
- DE-A1- 102013 222 030
- DE-A1- 102014 224 341
- DE-A1- 102020 201 973

## Beschreibung

Die vorliegende Erfindung betrifft einen Injektor zum Einspritzen von Kraftstoff, insbesondere zum Einblasen eines Gases, vorzugsweise zum direkten Einblasen von Wasserstoff. Dabei kann vorgesehen sein, dass der Injektor dazu ausgelegt ist, Kraftstoff in einen Brennraum einer Verbrennungskraftmaschine einzuspritzen.

Im Zuge von weltweit immer strenger werdenden Abgasgrenzwerten und ambitionierten Klimaschutzzielen steigen die umwelttechnischen Anforderungen an Verbrennungskraftmaschinen stetig an. Das Ziel sind in absehbarer Zukunft emissionsarme oder gar emissionsfreie Antriebstechnologien, die auch strengste Abgasgrenzwerte erfüllen und einen signifikanten Beitrag zum Erreichen der Klimaschutzziele liefern. Bei Technologien, die mit einer Verbrennung arbeiten sind diese Ziele nur bei einer Verwendung von klimaneutralen, regenerativ produzierten Kraftstoffen erreichbar, die entlang der gesamten Wertschöpfungskette keinerlei Emissionen verursachen (sogenannte "zero emissions"-Kraftstoffe).

Mit derzeitigen konventionellen Benzin-, Diesel- und Gasmotoren sind die Anforderungen an eine emissionsfreie Verbrennung - selbst unter Verwendung sogenannter E-Fuels, bspw. eines synthetisch erzeugten OME-Kraftstoffs, zu dessen Herstellung lediglich regenerative Energie benötigt wird - nicht erreichbar, da sich der Ausstoß an schädlichen Abgasen wie Stickstoffoxiden (NOₓ), unverbrannten Kohlenwasserstoffen (UHC) und Ruß mit heutigen Technologien nicht vollständig reduzieren lässt.

Prinzipiell erfüllen batteriebetriebene Antriebe die Zero-Emissions-Richtlinie während des Betriebs und sind v. a. im Pkw-Bereich auf dem Vormarsch. Wird hingegen die gesamte Wertschöpfungskette betrachtet, so ist jedoch die Produktion der (Lithium-)Akkus energetisch sehr kostspielig und unter umwelttechnischen Gesichtspunkten problematisch, da insbesondere starke Umweltschäden beim Rohstoffabbau auftreten und der Abbau der für die Batterien erforderlichen Rohstoffe nicht nachhaltig durchführbar ist. Zudem ist mit dem heute erzielbaren Leistungsgewicht der Batterien ein Einsatz in Maschinen mit hohem (Spitzen-) Leistungsbedarf nicht möglich.

Brennstoffzellenbetriebene Antriebe mit Versorgung aus regenerativ erzeugtem Wasserstoff erfüllen die vorgegebenen Klimaschutzziele und sind schon heute in sehr begrenztem Maße im Einsatz. Allerdings weist auch dieses Konzept einige Nachteile auf, bspw. eine im Vergleich zu heutigen Dieselantrieben geringe Spitzenleistung und eine geringe Wirtschaftlichkeit.

In den Fokus sind daher Wasserstoff-Verbrennungsmotoren gerückt, die eine vielversprechende Antriebsalternative darstellen. Diese existieren aber bis dato fast ausschließlich in sehr geringer Stückzahl oder als Demonstratoren mit geringem Reifegrad. Ein durch regenerative Energien erzeugter Wasserstoff würde alle Erfordernisse von" zero emission" erfüllen, da dieser emissionsfrei verbrennbar ist.

So finden sich im Pkw-Bereich bspw. Wasserstoff-Motoren mit äußerer Gemischbildung (PFI = port fuel injection), bei denen der Kraftstoff schon vor Eintritt in den Brennraum mit Luft in ausreichender Zeit gut durchmischt wird. Wasserstoff-Motoren mit direkter Einblasung des Kraftstoffs in den Brennraum (innere Gemischbildung, DI = direct injection) spielen heutzutage praktisch keine Rolle, weisen jedoch gegenüber dem PFI-Konzept u.a. eine höhere Effizienz, stabilere Verbrennung sowie eine Eliminierung der Gefahr einer Rückzündung in den Ansaugtrakt auf.

Bei direkt einspritzenden Wasserstoffmotoren wird typischerweise noch hinsichtlich des maximalen Einspritzdrucks im Injektor (< 60 bar: Niederdruck, > 60 bar: Hochdruck) unterschieden, wobei die Grenzen nicht eindeutig festgelegt und die Übergänge fließend sind. Höhere Drücke bieten das Potential einer verkürzten Einblasdauer in einer späteren Phase der Kompression bei höheren Brennraumdrücken, was eine erhöhte Effizienz und verbesserte Verbrennungsstabilität zur Folge hat. Allerdings sinkt die Gesamteffizienz, falls zuvor eine Komprimierung des Wasserstoffs nötig ist.

Wird der Wasserstoff zu 100 % aus regenerativen Energien gewonnen, kann mit Wasserstoff-Verbrennungsmotoren ein nahezu klimaneutraler Betrieb realisiert werden. Darüber hinaus bieten sich zahlreiche weitere Vorteile:
- Verwendung bekannter Technologien mit hohem Reifegrad und bestehender Produktionsanlagen
- unbegrenzte Verfügbarkeit des Wasserstoffs durch Elektrolyse von Wasser
- Nutzung des bestehenden Tankstellensystems möglich (nach entsprechender Umrüstung) mit schnellen Tankzeiten
- (fast) emissionsfreie Umwandlung des Wasserstoffs in der Verbrennung möglich, da CO2-neutral, nur minimale CO, UHC-, Partikel- und Ruß-Emissionen (lediglich verursacht durch Schmierstoffe im Zulaufsystem, unterhalb der Messgrenze) und nur minimale NOx-Emissionen durch geeignetes Verbrennungsverfahren (ggf. mit Abgasrückführung, SCR-Katalysator)
- deutlich geringere Anforderung an Reinheit des Wasserstoffs im Vergleich zu Brennstoffzellen-Antrieben
- kein Bedarf an Platin zur Herstellung wie bei Brennstoffzellen

Neben diesen zahlreichen Vorteilen gegenüber anderen Antriebskonzepten existieren jedoch auch einige Herausforderungen, die es bei der Entwicklung von Wasserstoff-Verbrennungsmaschinen zu bewältigen gibt:
- geringes Molekulargewicht von Wasserstoff, dadurch eine geringe Dichte einhergehend mit einer geringen volumetrischen Energiedichte (bei hoher massenspezifischer Energiedichte); siehe Tabelle 1
- Bereitstellung eines demzufolge hohen Volumenstroms bei der Einblasung von Wasserstoff
- entsprechende Bereitstellung von großen Strömungsquerschnitten im Injektor und damit benötigter deutlich größerer Hübe des Aktuators als bei konventionellen Antriebsarten
- einhergehende Entwicklung einer deutlich stärkeren Aktuatoreinheit bei gleichzeitig begrenztem Bauraum
- Dichtheit des Gesamtsystems / Verhinderung von externen Leckagen, v. a. im Hinblick auf Sicherheitsaspekte (Brand- und Explosionsgefahr aufgrund aus dem System austretenden Wasserstoff)
- erhöhte Verschleißgefahr an Führungen bewegter Bauteile aufgrund der praktisch nicht vorhandenen Schmierwirkung von Wasserstoff
- deutlich stärkere Neigung bewegter Bauteile zum Prellen an mechanischen Anschlägen in Gasinjektoren im Vergleich zu Injektoren mit Flüssigkraftstoffen durch geringe Dämpfwirkung bei der Gaskompression
- Materialbeständigkeit gegenüber Wasserstoff nötig im Hinblick auf die Gefahr einer Wasserstoffversprödung in mechanisch beanspruchten / druckbeaufschlagten Bauteilen (reduzierte Festigkeit) oder durch chemische Reaktion des Wasserstoffs mit in der Kupferspule des Aktuators vorhandenem Sauerstoff (Wasserstoffkrankheit des Kupfers)
- Gemischaufbereitung im Brennraum / Beeinflussung des Einblasstrahls / Zündverhalten bei Kleinstmengeneinblasung

**Tabelle 1: Massen- und volumenspezifischer Heizwert von Diesel und Wasserstoff**

| | Diesel | Wasserstoff (bei 25 °C) |
|---|---|---|
| Heizwert in MJ/kg | 43.0 | 120.0 |
| Heizwert in MJ/m³ | 35'819 | 9.8 bei 1 bar |
| | | 287.7 bei 30 bar |
| | | 2464.4 bei 300 bar |

DE 10 2014 224341 A1 zeigt einen Injektor, der in Wasserstoff-Verbrennungsmachinen verwendet wird.

Es ist das Ziel der vorliegenden Erfindung die vorstehend aufgeführten Nachteile zumindest teilweise zu überwinden oder abzumildern. Insbesondere soll dabei ein Kraftstoffinjektor geschaffen werden, der einen besonders geringen Verschleiß besitzt und dadurch eine verbesserte Robustheit und Widerstandsfähigkeit aufweist. Zudem ist es wünschenswert, einen Injektor zu schaffen, bei dem der Massenstrom des ausgegebenen Kraftstoffs gut prognostizierbar ist und keinen Schwankungen unterliegt, also ein glatter Verlauf in der Einspritzrate bzw. der Einblaserate erzielt wird (bspw. durch Verringern von Prelleffekten an Ventilen).

Zumindest einige oder sämtliche der vorgenannten Ziele werden mit einem Injektor zum Einspritzen von Kraftstoff, der sämtliche Merkmale des Anspruchs 1 aufweist, erreicht. Vorteilhafte Ausgestaltungen des Injektors sind dabei in den abhängigen Ansprüchen angegeben.

Ein erfindungsgemäßer Injektor zum Einspritzen von Kraftstoff, vorzugsweise zum Einblasen eines gasförmigen Kraftstoffs, im Besonderen Wasserstoff, umfasst eine Kraftstoffzuleitung zum Einführen eines unter hohen Druck stehenden gasförmigen Kraftstoffs, ein Aktivventil, das aktiv schaltbar ist und dazu ausgelegt ist, mindestens einen Durchgang zu verschließen oder freizugeben, um wahlweise eine Strömungsverbindung von der Kraftstoffzuleitung zu einem Bereich stromabwärts des Aktivventils freizugeben oder zu unterbrechen, und ein Passivventil, das stromabwärts des Aktivventils angeordnet ist und durch stromauf und stromab des Passivventils anliegende unterschiedliche Druckverhältnisse in einen verschließenden oder freigebenden Zustand passiv schaltbar ist, um wahlweise eine Strömungsverbindung von stromaufwärts des Passivventils zu einem Bereich stromabwärts des Passivventils freizugeben oder zu unterbrechen. Der Injektor ist dadurch gekennzeichnet, dass ein hin- und herbewegbarer Stößel (bzw. Ventileinsatz) des Passivventils einen Permanentmagnet umfasst oder ein Permanentmagnet ist, und eine Stößelführung zum Führen der Hin- und Herbewegung des Stößels vorgesehen ist, die elektrisch leitend und nicht magnetisierbar oder nur schwach magnetisierbar ist. Im Rahmen der Erfindung können die Materialien, aus denen Stößel und Stößelführung bestehen, auch vertauscht werden, wie in Anspruch 1 wiedergegeben.

Durch die Ausführung mit permanentmagnetischem Stößel und nicht/schwach magnetisierbarer, gut elektrisch leitender Stößelführung werden beim Öffnen und Schließen des Ventils Wirbelströme in der Stößelführung induziert, welche wiederum ein Magnetfeld induzieren, das dem ursprünglichen Magnetfeld des Stößels entgegenwirkt (entsprechend der Lenz'schen Regel). Dadurch wirkt -entsprechend dem Prinzip der Wirbelstrombremse- während des Öffnungs- und Schließvorgangs eine der Bewegung entgegengesetzte magnetische Kraft auf den Stößel, welche die Bewegung verlangsamt. Diese Bremskraft ist proportional zur Geschwindigkeit, mit der sich der Stößel bewegt, d.h. je stärker dieser durch Druckkräfte und/oder Federkraft beschleunigt wird, desto stärker wird die Bewegung durch die induzierten Wirbelströme gedämpft. Zu Beginn der Bewegung beim Öffnen bzw. Schließen ist die Geschwindigkeit sehr gering, so dass hier zunächst kein negativer Einfluss auf die Dynamik der Kraftstoffausgabe auftritt. Mit zunehmender Geschwindigkeit und/oder zunehmendem Abstand vom jeweiligen Anschlag erhöht sich die magnetische Dämpfwirkung. Dadurch wird die Aufprallgeschwindigkeit des Stößels an einem Gegenanschlag reduziert. Dies verringert den Verschleiß und erhöht die Robustheit des Designs, da die auf den Stößel beim Aufprallen einwirkenden Kräfte reduziert werden. Zudem wird ein glatter Verlauf der Einspritz- oder Einblaserate erzielt (durch Prellen des Stößels im Hubbereich, in der noch keine Entdrosselung stattfindet, kommt es ansonsten zu Einbrüchen im Ratenverlauf des ausgegebenen Kraftstoffs).

Die Grundidee der vorliegenden Erfindung ist es also, die Bewegungsdynamik des Stößels des Passivventils zu beschränken, indem dabei die Magnetkraft genutzt wird, die entsteht, wenn man einen Permanentmagneten in einem elektrisch leitenden Element bewegt. Dabei entsteht eine der Bewegung des Magneten entgegenstehende Magnetkraft, die bei dem Injektor zum Einspritzen von Kraftstoff in vorteilhafter Weise genutzt werden kann.

Nach einer vorteilhaften Modifikation der vorliegenden Erfindung kann vorgesehen sein, dass in einem geschlossenen Zustand des Passivventils der hin- und herbewegbare Stößel des Passivventils mit einem Anschlagelement in Kontakt steht, um mindestens einen Durchgang des Anschlagelements abzudichten.

Dabei definiert das Anschlagelement mindestens eine Öffnung, die in einem abgehobenen Zustand des Stößels eine Fluidverbindung hin zur Kraftstoffzuleitung des Injektors aufweist, sodass es zu einem Strömen des Kraftstoffs durch das Passivventil kommt. Diese mindestens eine Öffnung wird bei einem Anliegen des Stößels an dem Anschlagelement, das beispielsweise eine Ventilplatte eines Injektors darstellen kann, verschlossen, wodurch die Strömungsverbindung unterbunden ist. Um den maximalen Hub des Stößels festzulegen, kann auch ein Gegenanschlag vorgesehen sein, an dem der Stößel anschlägt, wenn er maximal weit von dem Anschlagelement entfernt ist. Das Anschlagelement weist also demnach eine durch den Stößel abdichtbare Öffnung auf, sodass im Zusammenwirken mit dem Stößel das Ventil in seine geschlossenen Stellung bringbar ist. Der Stößel kann sich also nur zwischen Anschlag und Gegenanschlag in eine Linearbewegung hin- und herbewegen.

Hierbei kann vorteilhafterweise vorgesehen sein, dass das Anschlagelement eine Ventilplatte des Injektors ist, wobei die Ventilplatte vorzugsweise von einer ersten ihrer flächigen Seiten durch einen Anker des Aktivventils und von der dazu gegenüberliegenden zweiten flächigen Seite von dem Stößel des Passivventils kontaktierbar ist. Typischerweise verfügt ein Injektor über einen aktiv betätigbaren Anker, der beispielsweise mithilfe einer Spule aus einer Schließstellung abhebbar ist.

So kann beispielsweise vorgesehen sein, dass der Anker von einer Seite auf die Ventilplatte wirkt und der Stößel von der anderen Seite in entgegengesetzte Richtung auf die Ventilplatte wirkt. So kann mindestens ein durch die Ventilplatte verlaufender Durchgang von beiden Seiten abgedichtet sein, was einen besonders platzsparenden Aufbau des Injektors ermöglicht. Die Verwendung des Passivventils ist dabei von Vorteil, da ein sehr hoher von der Ausgabeöffnung des Injektors herrührender Druck (beispielsweise erzeugt durch einen Verbrennungsvorgang in einem Brennraum) nicht dazu in der Lage ist, einen Anker entgegen seiner Schließrichtung aus einer Schließstellung zu heben. Ein so orientierter Druck wird dabei durch das Passivventil verhindert, da dieses dabei in seine Schließstellung übergeht bzw. von einem solchen von dem Brennraum ausgehenden Druck in die Schließstellung gedrängt wird.

Vorteilhafterweise kann nach der Erfindung vorgesehen sein, dass die das Anschlagelement, insbesondere die Ventilplatte kontaktierende Anschlagfläche des Stößels als Flachdichtung, Kegeldichtung und/oder Kugeldichtung ausgebildet ist. Dem Fachmann ist klar, dass eine Vielzahl von möglichen Kontaktpaarungen zu einer gewünschten Dichtwirkung führen kann. Besonders vorteilhaft ist aber die Flachdichtung, da bei einem Öffnungsvorgang, in dem der Stößel aus einer schließenden Position von der Ventilplatte bzw. dem Anschlagelement weggedrückt wird, die von der Kraftstoffzuführleitung herrührende Kraftstoffströmung direkt auf eine eben ausgeführte Platte auftrifft, sodass dadurch ein hoher Staudruck entsteht und große Druckkräfte wirken, welche den Stößel schnell und sicher öffnen.

Nach einer optionalen Fortbildung der vorliegenden Erfindung kann vorgesehen sein, dass der Stößel ein Permanentmagnet ist oder einen Permanentmagnet aufweist, dessen magnetische Pole in Längsrichtung des Injektors versetzt angeordnet sind.

Durch die Anordnung der unterschiedlichen Pole des Permanentmagneten versetzt zur Bewegungsrichtung des Stößels entstehen magnetische Feldlinien, die in großen Teilen parallel zur Bewegungsrichtung des Stößels (und damit auch zur Längsrichtung des Injektors) verlaufen. Dies ist erforderlich, um entsprechende Wirbelströme in der Stößelführung zu erzeugen, die -aufgrund der dabei entstehenden Magnetfelder- die gewünschte Bremswirkung der Stößelbewegung bewirken.

Nach einer optionalen Modifikation der vorliegenden Erfindung kann vorgesehen sein, dass der Stößel im Querschnitt die Form eines Kreisrings hat, sodass in einer Offenstellung des Passivventils in dessen mittiger Ausnehmung eine Strömung des Kraftstoffs durchführbar ist.

In einer Schließstellung dichtet eine Stirnfläche des Stößels, also beispielsweise eine Kontur eines Kreisrings, mindestens einen Durchgang eines Anschlagelements ab. Der mindestens eine Durchgang ist also durch die Stirnfläche (Kontur des Kreisrings) überdeckt und verhindert bei einem direkten Kontakt das Ausströmen eines Kraftstoffs in Richtung stromab des Passivventils.

Ferner kann nach der vorliegenden Erfindung vorgesehen sein, dass die Stößelführung den Stößel umfangsseitig umgibt und sich vorzugsweise entlang des gesamten maximal möglichen Hubs des Stößels erstreckt. Bevorzugterweise erstreckt sich die Stößelführung auch über die Länge des maximalen Hubs des Stößels hinaus, beispielsweise um mehr als 5 %, mehr als 10 % oder mehr als 15 % der Gesamtlänge des Hubs.

Durch die Anordnung der Stößelführung über den gesamten maximal möglichen Hub des Stößels wird sichergestellt, dass der gewünschte Bremseffekt gerade auch in den Anschlagbereichen des Stößels auftritt. Dem Fachmann es klar, dass auch eine zweiteilige oder mehrteilige Ausgestaltung der Stößelführung vorgesehen sein kann, bei der beispielsweise ein in Längsrichtung gesehener Mittenbereich der Stößelführung eine Unterbrechung aufweist, sodass dort keine Bremswirkung auf den Stößel wirkt.

Weiter kann nach der Erfindung vorgesehen sein, dass die Stößelführung aus einem anderen Material ist als das Gehäuse des Injektors. So kann das Gehäuse des Injektors eine Ausnehmung aufweisen, um die Stößelführung aufzunehmen. Es kann aber auch vorgesehen sein, dass das gesamte Gehäuse des Injektors aus einem elektrisch leitenden Material, das jedoch nicht oder nur schwach magnetisierbar ist, gefertigt ist. Ein separates Einsetzen einer Stößelführung in das Gehäuse bzw. den relevanten Gehäuseabschnitt kann dann entfallen.

Nach einer vorteilhaften Fortbildung der vorliegenden Erfindung kann vorgesehen sein, dass die Stößelführung die Form einer Hülse aufweist, vorzugsweise wobei der Innendurchmesser der Hülse dem Außendurchmesser des Stößels entspricht oder nicht mehr als 10 %, vorzugsweise 5 %, bevorzugterweise 2 % größer als der Außendurchmesser des Stößels ist. Durch die abgestimmten Maße von Innendurchmesser der Stößelführung und Außendurchmesser des Stößels (der den Permanentmagneten aufweist oder aus diesem besteht) wird gewährleistet, dass die vom Permanentmagnet ausgehende magnetischen Feldlinien einen möglichst geringen Luftspalt beim Übertritt in die Stößelführung überwinden müssen, der der in die Stößelführung induzierten Magnetkraft entgegensteht.

Nach einer weiteren vorteilhaften Modifikation der vorliegenden Erfindung kann vorgesehen sein, dass der Stößel gleitend in der Stößelführung angeordnet ist und/oder die unterschiedlichen Pole des mit dem Permanentmagneten versehenen Stößels bzw. des als Permanentmagnet ausgebildeten Stößels in Gleitrichtung versetzt zueinander angeordnet sind.

Ferner kann nach der Erfindung vorgesehen sein, dass das Anschlagelement, mit dem der Stößel in einer Schließstellung des Passivventils in Kontakt steht, aus einem nicht-magnetisierbaren oder einem nur schwach magnetisierbaren Material ist.

Das Anschlagelement, das insbesondere die Ventilplatte des Injektors darstellen kann, kann dann unabhängig von der Stärke der Magnetisierung des Stößels nicht von diesem magnetisiert werden. Dies ist insbesondere dann von Vorteil, wenn der Stößel direkten Kontakt mit dem Anschlagelement (der Ventilplatte) in der Schließstellung aufweist, so dass ein "Kleben" durch magnetische Anziehung zwischen Ventilstößel und Ventilplatte nicht auftreten kann.

Nach einer weiteren, optionalen Fortbildung der vorliegenden Erfindung kann vorgesehen sein, dass zwischen einem Anschlagelement für die Schließstellung, insbesondere einer Ventilplatte, und dem Stößel ein Distanzelement vorgesehen ist, um eine maximale Magnetkraft zwischen dem Anschlagelement und dem Stößel einzustellen, wobei vorzugsweise das Distanzelement eine Scheibe, eine Folie oder eine an dem Anschlagelement und/oder dem Stößel angebrachte Beschichtung ist. Das Distanzelement ist aus einem unmagnetischen oder nur schwach magnetischen Material, insbesondere einem Kunststoff, bspw. Polymid.

Besonders vorteilhaft ist dies, wenn das Anschlagelement, also beispielsweise die Ventilplatte, ein ferromagnetisches Material ist, das bei einem Aussetzen eines hohen Magnetfeldes selbst magnetisch wird. Um dabei eine sehr hohe Magnetkraft zu vermeiden, die typischerweise dann auftritt, wenn direkter Kontakt zwischen dem Permanentmagneten und dem Anschlagelement vorliegt, ist ein Distanzelement vorgesehen, das einen Mindestabstand von dem Permanentmagneten zu dem Anschlagelement beibehält. Das Material zur Umsetzung des Distanzelements kann dabei typischerweise ein Kunststoff, insbesondere ein Polymid sein. Dabei kann auch der Stößel und/oder die Ventilplatte mit einer entsprechenden Beschichtung versehen sein. So kann verhindert werden, dass unerwünscht hohe Magnetkräfte auftreten, die zu einem Einprägen eines Magneten in das ferromagnetische Material des Anschlagelement führen können. Das Distanzelement kann also die maximal zulässige Magnetkraft regulieren, die auf das Anschlagelement, insbesondere die Ventilplatte, einwirken darf, in dem ein minimaler Abstand des Permanentmagneten zum Anschlagelement nicht unterschritten wird.

Nach einer weiteren vorteilhaften Ausgestaltung der vorliegenden Erfindung kann vorgesehen sein, dass die Stößelführung und der Stößel koaxial zueinander angeordnet sind, vorzugsweise wobei die Stößelführung den Stößel umfangsseitig umgibt.

Ferner kann nach der Erfindung vorgesehen sein, dass die Stößelführung und der Stößel jeweils rotationssymmetrisch ausgebildet sind und eine gemeinsame Rotationsachse bzw. Drehachse aufweisen. Dabei kann die gemeinsame Rotationsachse bzw. Drehachse parallel zur Längsrichtung des Injektors verlaufen oder mit dieser identisch sein. Rotationssymmetrische oder drehsymmetrische Bauteile sind leichter zu verbauen und einfacher herzustellen.

Die Erfindung betrifft ferner Brennkraftmaschine mit einer Kraftstoffeinspritzung, insbesondere mit einer Gas-Direkteinspritzung, im Besonderen mit einer Wasserstoff-Direkteinspritzung, umfassend einen Injektor nach einem der vorstehend diskutierten Varianten.

Weitere Merkmale, Einzelheiten und Vorteile der Erfindung werden anhand der nachfolgenden Figurenbeschreibung ersichtlich. Dabei zeigen:
- Fig. 1:: eine schematische Schnittansicht eines Injektors nach dem Stand der Technik,
- Fig. 2:: eine Darstellung verschiedener Zustände von Bauteilen und Drücken in einem Injektor,
- Fig. 3:: eine schematische Teilschnittansicht eines Injektors im Bereich des Passivventils,
- Fig. 4a-b:: eine schematische Schnittansicht des Injektors in einem geschlossenen und einem offenen Zustand,
- Fig. 5:: eine schematische Teilschnittansicht eines Injektors nach der Erfindung in einem geschlossenen Zustand,
- Fig. 6:: eine schematische Teilschnittansicht des erfindungsgemäßen Injektors nach einer zweiten Ausführungsform in einem geschlossenen Zustand, und
- Fig. 7:: eine skizzenhafte Darstellung zur Erläuterung des zugrundeliegenden Wirkprinzips der vorliegenden Erfindung.

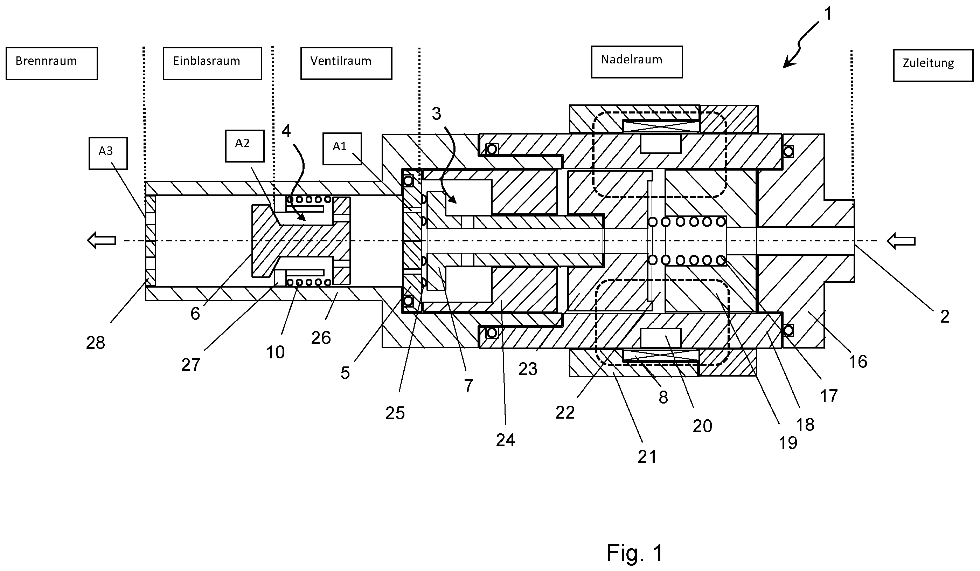

Die nachfolgende detaillierte Figurenbeschreibung der Fig. 1 wird anhand eines Injektors zum Einblasen eines gasförmigen Kraftstoffs erläutert, wobei dem Fachmann aber klar ist, dass von der Erfindung ebenfalls ein Injektor zum Einspritzen eines anderen Kraftstoffs umfasst ist.

Fig. 1 zeigt dabei einen Längsschnitt eines Injektors 1 zum Einblasen eines gasförmigen Kraftstoffs, beispielsweise Wasserstoff, in einen Brennraum. Der Injektor 1 besitzt dabei ein Injektorgehäuse, in dem sich unterschiedliche Komponenten des Injektors 1 befinden. Anschlussseitig ist eine Kraftstoffzuleitung 2 zum Einführen eines Kraftstoffs in den Injektor 1 vorgesehen. Zunächst wird dabei der Kraftstoff oder ein anderes brennbares Fluid (beispielsweise ein Wasserstoff) durch eine etwa zentral im Injektorgehäuse verlaufende Bohrung eines Deckels 16 und im Anschluss daran durch einen Fluidkanal eines Ankergegenstücks 19, einer Durchgangsöffnung der Ankerbasis 23 und dem hohlen Inneren des Ankers 7, das manchmal auch Hohlnadel oder einfach nur Nadel genannt wird, zu dem von der Anschlussseite entfernten Ende des Ankers 7 geleitet.

Abhängig von der Stellung des Ankers 7 gegenüber der Ventilplatte 5 sind die die Ventilplatte 5 durchstoßenden Öffnungen A1 verschlossen oder freigegeben. In dem in Fig. 1 dargestellten Zustand sind die Durchgänge A1 durch das Anpressen des Ankers 7 gegen die Ventilplatte 5 verschlossen, da die Stirnseite des Ankers 7 die Öffnungskonturen der Durchgänge A1 abdeckt. Zum Verbessern der Dichtheit können Dichtelemente 25 vorgesehen sein, die um die Öffnungskonturen der Durchgänge A1 herum verlaufen und in einem abdichtenden Zustand die Stirnseite des Ankers 7 kontaktieren. Sind die Durchgänge A1 durch die Stirnseite des Ankers 7 verschlossen, wird die Fluidströmung des Kraftstoffs an dieser Stelle des Injektors 1 aufgehalten und es kommt zu keiner stromabwärtigen Strömung von Kraftstoff jenseits der Ventilplatte 5.

Sind die Durchgänge A1 hingegen freigegeben, was durch ein Abheben des Ankers 7 weg von der Ventilplatte 5 umgesetzt wird, strömt der mit einem gewissen Druck in den Injektor 1 eingeführte Kraftstoff aus und tritt über die mehreren Durchgänge A1 auf der von dem Anker 7 beabstandeten Seite der Ventilplatte 5 aus. Nach Durchströmen eines Passivventils 4, das in dem Injektor 1 vorgesehen ist, strömt der unter Druck stehende Kraftstoff durch die Einblaskappe 28 aus dem Injektor aus. Nach einem Durchströmen der Einblaskappe 28 befindet sich dann der durch den Injektor 1 abgegebene Kraftstoff typischerweise außerhalb des Injektors 1 in einem Brennraum. Zudem findet in dem Brennraum 16 typischerweise eine Komprimierung des Kraftstoffs statt, wo der Kraftstoff sich dann entzündet bzw. entzündet wird.

Das Passivventil 4, das auf der vom Anker 7 abgewandten Seite der Ventilplatte 5 liegt, dient dazu, einen im Brennraum herrschenden sehr hohen Druck vom Anker 7 fernzuhalten. Anderenfalls könnte es passieren, dass der sehr hohe im Brennraum herrschende Druck auf den Anker 7 wirkt und diesen aus seiner den mindestens einen Durchgang A1 schließenden Position wegbewegt. In einem darauffolgenden Arbeitsschritt des Injektors 1 würde dann nicht mehr der zum Verbrennen erforderliche Kraftstoff in den Brennraum eingeleitet werden, sondern ein bereits zumindest teilweise verbranntes Gemisch, was zu einem Unterbrechen des Verbrennvorgangs oder bestenfalls zu einer geringeren Leistung des Verbrennvorgangs führen kann.

Das Passivventil 4 weist dabei einen Ventilstößel 6, eine Ventilführung 27 und eine Ventilfeder 10 auf, die den Ventilstößel 6 in eine Schließrichtung drängt, sodass ein Ausströmen von Kraftstoff über die Öffnungskontur A2 des Passivventils 4 nur dann auftritt, wenn auf der zur Ventilplatte 9 zugewandten Seite des Passivventils 4 ein Druck herrscht, der mindestens um die von der Ventilfeder 10 ausgeübte Rückstellkraft des Ventilstößel 6 größer ist als der auf der von dem Passivventil 4 zur Ventilplatte 5 abgewandten Seite herrschende Druck. Ein Einströmen eines Fluids von der zum Brennraum zugewandten Seite des Passivventils 4 wird dadurch verhindert.

Der Anker 7 ist in der Längsrichtung des Injektors 1 hin- und herbewegbar. Die Bewegung des Ankers 7, der einstückig oder aus einer Ankerbasis 23 und einer Ankerspitze (auch Nadel oder Hohlnadel genannt) bestehen kann, wird dabei über ein Aktivventil 3 gesteuert, das in der vorliegenden Darstellung der Fig. 1 ein Magnetventil ist. Der Anker 7 ist dabei so ausgestaltet, dass er auf die von einer Spule 8 erzeugte Magnetkraft reagiert. Die Spule 8 kann dabei wahlweise so von Strom durchflossen sein, dass die dabei entstehende magnetische Kraft den Anker 7 in Richtung des Kraftstoffanschlusses 2 bewegt. Durch diese Bewegung kommt es zu einem Anheben des Ankers 7 gegenüber der Ventilplatte 5. Dadurch werden die Durchgänge A1 in der Ventilplatte 5 freigegeben, sodass die Ventilplatte 5 von Kraftstoff durchströmt werden kann.

Für eine präzise Führung des Ankers 7 entlang der Längsachse des Injektors bzw. kann eine Ankerführung 24 vorgesehen sein, die eine Außenseite des Ankers 7 umfangsseitig umschließt.

Zwischen dem Anker 7 und dem Ankergegenstück 19 ist ein Luftspalt 22 vorgesehen, der bei einer Bestromung der Spule 8 geschlossen bzw. verringert wird.

Um den magnetischen Fluss bei einer Umsetzung des Aktivventils 3 als Magnetventil zu verbessern, kann die Spule 8 an ihrer umfangsseitigen Außenseite von einem Eisenrückschluss 21 umgeben sein, in dem sich das Magnetfeld besonders gut ausbreiten kann. Ähnlich verhält es sich mit dem direkt das Ankerelement 5 und das Ankergegenstück 27 umgebenden Gehäusebestandteil, das ebenfalls vorzugsweise aus einem magnetisierbaren Material besteht. So kann es von Vorteil sein, wenn das Polrohr 18, das ein Bestandteil des Injektorgehäuses 2 darstellt, ebenfalls aus Eisen oder einem anderen ferromagnetischen Material ist. Dasselbe gilt auch für das Ankergegenstück 19, das vorteilhafterweise ebenfalls aus einem magnetisierbaren Material besteht.

Eine visualisierte Darstellung der magnetischen Feldlinien ist jeweils durch die gepunktete, geschlossene Linie illustriert, die kreisförmig um die Spule herum verläuft. Durch die Magnetkraft wird das Ankerelement 7 (zusammen mit der Ankerbasis 23) hin zum Ankergegenstück 19 gezogen und so von der Ventilplatte 5 bzw. von den die Ventilplatte 5 durchbrechenden Durchgängen A1 abgehoben, sodass es zu einem Einströmen von Kraftstoff hin zum Passivventil kommen kann, von wo aus Kraftstoff schlussendlich über die Einblaskappe 28 in den Brennraum eingeleitet wird.

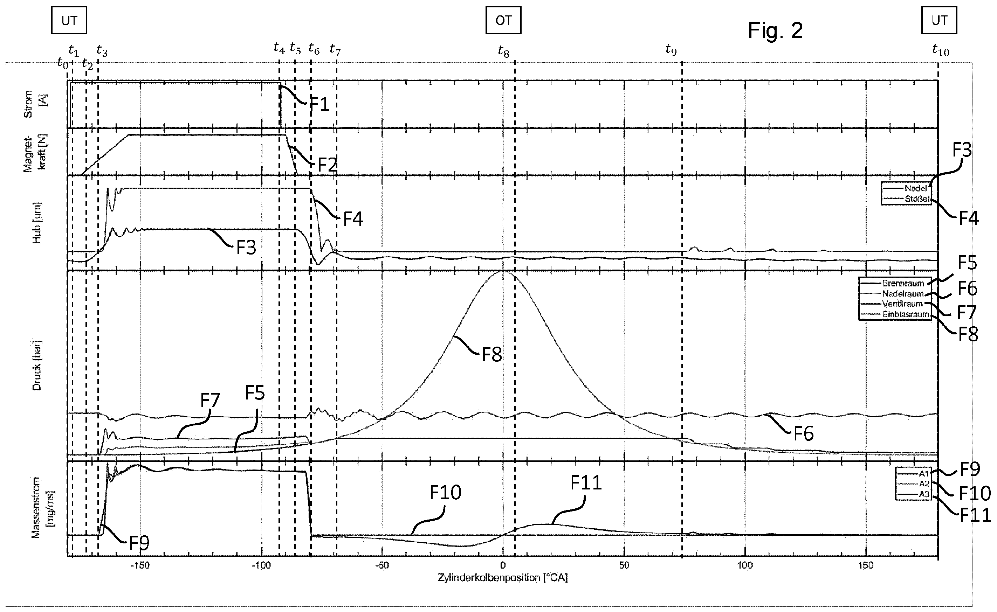

Fig. 2 zeigt das prinzipielle Verhalten des Injektors 1 während einer Einblasung. In Ausgangsstellung zum Zeitpunkt *t*₀ am unteren Totpunkt (UT) des Zylinderkolbens werden Anker 7 und Ventilstößel 6 durch die vorgespannte Ankerfeder 17 bzw. Passivventilfeder 10 in ihrem jeweiligen Anschlag gedrückt und verschließen die Drosselstellen A1 bzw. A2, welche den Nadelraum mit dem Ventilraum bzw. den Ventilraum mit dem Einblasraum im geöffneten Zustand von Anker 7 bzw. Ventilstößel 6 verbinden. Der Druck im Injektor 1 entspricht dem Druck in der Zuleitung, der Druck im Brennraum sowie im Einblasraum entspricht dem Ladedruck während der Ansaugphase des Zylinderkolbens, in der Frischluft über die Einlassventile in den Brennraum angesaugt wird. Der Druck im Ventilraum entspricht in etwa dem Brennraumdruck und hängt u.a. von der Ankerfeder 17, dem Druck im Brennraum während der Phase des Ausstoßens der heißen Verbrennungsgase über die Auslassventile des Brennraums und ggf. vorangehender Einblasungen ab. Die Funktionsdarstellung folgt im Folgenden vereinfacht und ohne Berücksichtigung des Ladungswechsels durch Öffnen und Schließen der Ein- und Auslassventile des Brennraums.

Zum Zeitpunkt *t*₁ wird vom Ansteuergerät ein Spannungssignal über die elektrischen Kontakte an die Spule 8 des Aktuators angelegt, so dass der Strom F1 im elektrischen Kreis bis auf ein definiertes Endniveau ansteigt. Die stromdurchflossene Spule 8 induziert ein magnetisches Feld im Aktuator, dessen Magnetfeldlinien sich torusförmig um die Spule herum ausbreiten (siehe Fig. 1). Durch das magnetische Feld wird eine Magnetkraft F2 im Luftspalt zwischen Anker 7 und Ankergegenstück 19 aufgebaut, wodurch zum Zeitpunkt *t*₂ der Anker 7 zum Ankergegenstück 19 angezogen wird, sobald die Magnetkraft F2 die Schließkraft (Summe aus Vorspannkraft der Ankerfeder 17 und Druckkräften auf den Anker 7) übertrifft. Der Aufbau des Magnetfeldes und damit der Magnetkraft F2 wird dabei durch Wirbelströme in den Eisenteilen des Magnetkreises verzögert. Der Anker 7 ist einteilig oder fest mit der Ankerbasis 23 verbunden, so dass sich der Anker 7 gleichförmig mit dem Ankerhub (oder auch: Nadelhub) F3 bewegt. Sobald das Dichtelement 25 auf der Ventilplatte 5 zum Zeitpunkt *t*₃ nicht mehr in Kontakt mit der Stirnfläche des Ankers 7 ist, wird die Verbindung zwischen Nadelraum und Ventilraum freigegeben, so dass der Kraftstoff vom Nadelraum in den Ventilraum strömt. Dadurch erhöht sich der Druck im Ventilraum. Sobald die Druckdifferenz von Ventilraum zu Einblasraum einer Kraftdifferenz auf den Ventilstößel 6 in gleicher Höhe wie der Vorspannkraft der Ventilfeder 10 entspricht, öffnet das Passivventil 4, d. h. der Ventilstößel 6 bewegt sich entlang eines Ventilstößelhubs F4 vom Sitz weg und gibt die Verbindung zwischen Ventilraum und Einblasraum frei, so dass Kraftstoff vom Ventilraum in den Einblasraum strömt. Dadurch kommt es zu einem Druckanstieg im Einblasraum (vgl. F8: Druck im Einblasraum). Der Kraftstoff strömt stromab weiter durch die Öffnung(en) A3 in der Einblaskappe 28 in die Brennkammer. Die Einblaskappe 28 ist dabei so gestaltet, dass die Strömung in einem definierten Zustand (Strahlorientierung, Eintrittsimpuls, Strahlbild, etc.) in den Brennraum eingebracht werden kann. Der geöffnete Zustand von Anker 7 und Ventilstößel 6 wird während der gesamten restlichen Bestromungsphase beibehalten. Das Stromniveau kann (z.B. durch ein PWM-Spannungssignal) reduziert werden, sobald der Anker 7 vollständig geöffnet ist und ein mögliches Prellen nicht zu einem Schließen des Ankers 7 führt. Während der Einblasung befindet sich der Zylinder des Motors in der Kompressionsphase, so dass der Brennraumdruck F5 stetig ansteigt.

Um den Einblasvorgang zu beenden, wird die Spannungsversorgung durch das Steuergerät beendet, so dass der Strom F1 durch die Spule 8 bis auf null reduziert wird (Zeitpunkt *t*₄). Aufgrund der Wirbelströme zeitlich verzögert baut sich auch die Magnetkraft F2 ab. Sobald die Magnetkraft F2 geringer ist als die Summe aus der Schließkraft der Ankerfeder 17 und den hydraulischen Kräften auf den Anker 7, beginnt sich der Anker 7 gleichförmig zu schließen (Zeitpunkt *t*₅); vgl. auch F3, F4. Trifft die Stirnseite des Ankers 7 auf das Dichtelement 25 der Ventilplatte 5, so wird die Verbindung zwischen Nadelraum und Ventilraum getrennt und der Kraftstofffluss vom Nadelraum in den Ventilraum unterbrochen (Zeitpunkt *t*₆). Damit sinkt der Druck im Ventilraum F7. Wenn die Druckdifferenz vom Ventilraum F7 zum Einblasraum F8 einer Kraftdifferenz auf den Ventilstößel 6 in gleicher Höhe wie der Ventilfederkraft entspricht, bewegt sich der Ventilstößel 6 zurück in seine Schließposition am Ventilsitz 27 und wird durch den zunehmenden Druck F5 im Brennraum und damit im Einblasraum gegen den Sitz 27 gedrückt, so dass die Kraftstoffverbindung zwischen Ventilraum und Einblasraum (ggf. nach einer Phase des Prellens des Stößels am Ventilsitz 27) unterbrochen wird (Zeitpunkte *t*₆ - *t*₇)*.* Der Einblasvorgang ist damit abgeschlossen. Während der weiteren Kompressionsphase des Brennraums bis zum oberen Totpunkt (OT) im Zeitraum *t*₇ - *t*₈ wird das Luft-Brennstoffgemisch im Einblasraum komprimiert, während es in der anschließenden Expansionsphase entspannt (Zeitraum *t*₈ - *t*₉), wobei der weitere zwischenzeitliche Anstieg des Brennraumdrucks F5 aufgrund von Verbrennung der Einfachheit halber hier nicht dargestellt ist. Sinkt der Druck im Brennraum so weit ab, dass die Differenz aus Druckkräften auf den Ventilstößel 6 der Vorspannkraft der Ankerfeder 17 entspricht (Zeitpunkt *t*₉), so öffnet sich der Ventilstößel 6 kurzzeitig erneut, so dass ein Teil des im Ventilraum vorhandenen Kraftstoffs in den Brennraum entweicht. Dieser Vorgang ist abhängig von der Federkraft und kann in wiederholtem Male auftreten (Zeitraum *t*₉ - *t*₁₀).

Der jeweilige Massenstrom des Kraftstoffs über die Durchgänge A1 der Ventilplatte 5, die Durchgänge A2 des Stößels 6 und die und die Durchgänge A3 der Einblaskappe 28 ist dabei mit F9, F10 bzw. F11 angegeben.

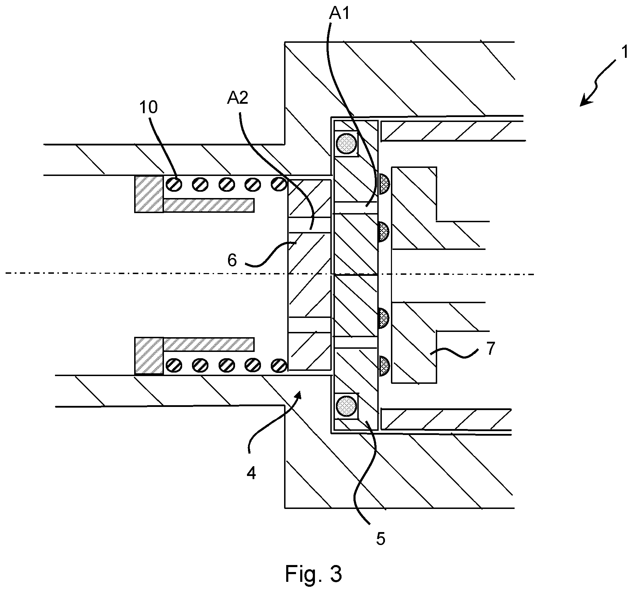

Fig. 3 zeigt eine Teilschnittansicht eines Injektors 1 mit Fokus auf das Passivventil 4. Man erkennt, dass der Stößel 6 des Passivventils 4 an einer Unterseite der Ventilplatte 5 vorgesehen ist und die in der Ventilplatte 5 vorgesehenen Durchgänge A1 durch direkten Kontakt abdichtet.

Dabei wird der Stößel 6 durch ein Federelement 10 in seine Schließstellung gedrängt, wobei das Federelement 10 sich an einem stromabwärts angeordneten Gegenanschlag abstützt. Zudem erkennt man, dass die durch den Stößel 6 verwirklichte Dichtung an der Unterseite der Ventilplatte 5 eine Flachdichtung bzw. ein Flachsitz ist. Die dargestellte Konfiguration mit einer direkten Abdichtung an der Unterseite der Ventilplatte 5 ist dabei sehr raumsparend und ermöglicht in Längsrichtung sehr kurze Injektoren 1.

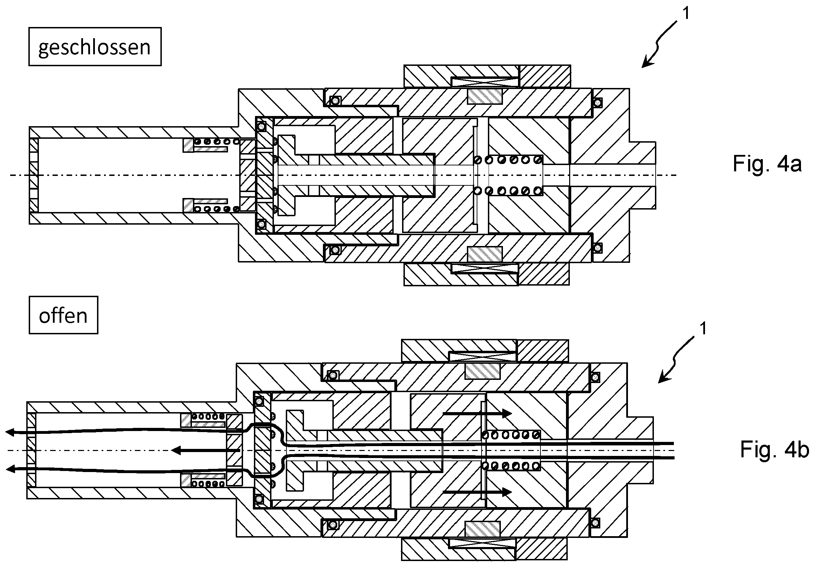

Fig. 4a und Fig. 4b zeigen dabei einen geschlossenen Zustand (Fig. 4a) und einen geöffneten Zustand (Fig. 4b) des Injektors. In Fig. 4b ist dabei die Strömung des Kraftstoffs ausgehend von der Kraftstoffzuleitung hin zur Einblaskappe mit Pfeilen dargestellt. Weiter ist auch die aus ihrer jeweiligen Schließstellung erforderliche Bewegung der Bauteile, die zum Erzeugen der Fluidverbindung zwischen der Kraftstoffzuleitung und der Einblaskappe vonnöten ist, durch Pfeile hervorgehoben. Man erkennt, dass der Anker aufgrund einer Bestromung der Spule aus seiner Schließstellung abgehoben ist, was dazu führt, dass der unter hohem Druck stehende Kraftstoff den Stößel des Passivventils aus seiner Schließstellung drängt. Ist eine entsprechende Bewegung der Bauteile erfolgt, kann der unter hohem Druck stehende Kraftstoff von der Kraftstoffzuleitung hin zur Einblaskappe aus dem Injektor 1 herausströmen.

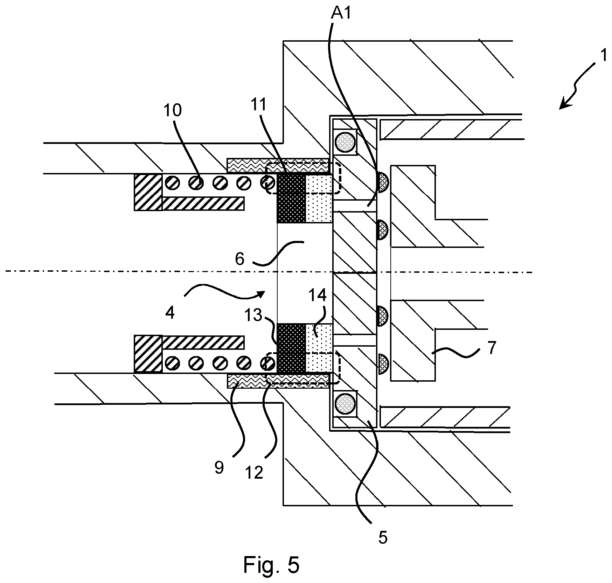

Fig. 5 zeigt eine erste Ausführungsform der vorliegenden Erfindung, wobei der bewegbare Stößel 6 ebenfalls mithilfe eines Federelements 10 in seine Schließstellung gedrängt wird. Anzumerken ist, dass auch andere Umsetzungen des Drängelement, dass vorliegend mithilfe eines Federelements ausgestaltet ist, möglich sind. Wie man erkennen kann, ist dabei der Stößel 6 durch einen Permanentmagneten 11 umgesetzt, dessen magnetische Pole 13, 14 entlang der Bewegungsrichtung versetzt angeordnet sind. Der Südpol 13 ist demnach beispielsweise auf der zum Anschlagelement 5 beabstandeten Seite angeordnet, wohingegen der Nordpol 14 an der zum Anschlagelement 5 zugewandten Seite des Stößels 6 vorgesehen ist. Die durch den Permanentmagnet 11 ausgebildeten magnetischen Feldlinien 12 sind in Fig. 5 durch einen gepunkteten, geschlossenen Kreis dargestellt. Wird der Stößel 6 entlang seiner Bewegungsrichtung bewegt, also von der Ventilplatte 5 abgehoben oder in Richtung dieser bewegt, erzeugt das von dem Stößel 6 ausgehende Magnetfeld Wirbelströme in der Stößelführung 9. Diese Wirbelströme erzeugen wiederum eine Magnetkraft, die der Bewegungsrichtung des Stößels 6 entgegensteht, sodass es zu einem Abbremsen des Stößels kommt. Dadurch wird insbesondere das Prellen des Stößels 6 beim Kontaktieren der Ventilplatte 5 oder des Gegenanschlags vermindert, was zu einer besseren Vorhersehbarkeit und einer gleichmäßigeren Ausgabe der durch den Injektor ausgegebenen Kraftstoffrate führt. Die durch das Prellen erzeugte Welligkeit der Kraftstoffrate, wie sie beispielsweise in Fig. 2 ersichtlich ist (vgl. F9 und F10) entsteht demnach nicht mehr.

Der als Permanentmagnet ausgebildete Stößel 6 ist dabei umfangsseitig von der Stößelführung 9 umschlossen, wobei die Stößelführung 9 die Form einer Hülse besitzt. Die Hülse 9 kann dabei so ausgebildet sein, dass sie den Stößel 6 umfangsseitig vollständig umschließt. Ferner ist die Stößelführung 9 durchgängig über die gesamte Länge der beiden voneinander in Längsrichtung beabstandeten Anschlagpunkte des Stößels 6 angeordnet, und geht vorzugsweise auch noch darüber hinaus. So ist an dem Gegenanschlag die Stößelführung 9 auch noch an einem weiter entfernten Bereich in Längsrichtung vorgesehen, der niemals in direkten Kontakt mit den Stößel 6 kommen kann, wobei dies aber gewollt ist, da das von dem Stößel 6 ausgehenden Magnetfeld sich auch in weiter entfernte Abschnitte erstrecken kann. Demnach kann also nach der Erfindung vorgesehen sein, dass die Stößelführung sich nicht nur im Hubbereich des Stößels 6 erstreckt, sondern auch über diesen hinausgeht.

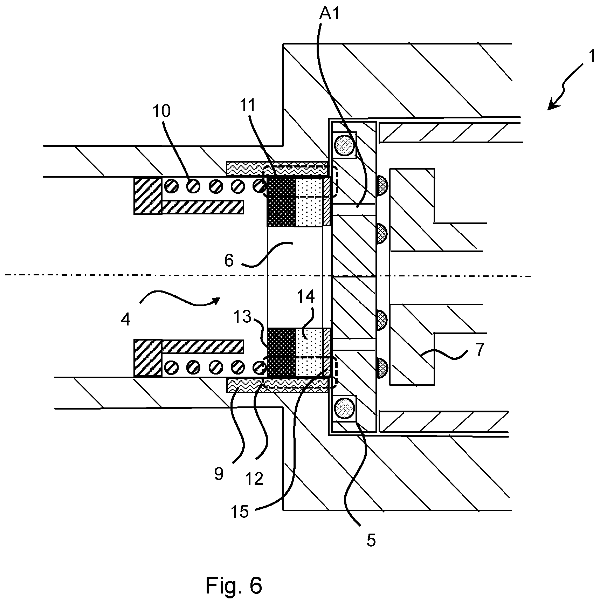

Fig. 6 zeigt eine schematische Teilschnittansicht des erfindungsgemäßen Injektors nach einer zweiten Ausführungsform in einem geschlossenen Zustand. Die abgebildete Darstellung ist mit der aus Fig. 5 ähnlich, wobei aber nun im Zwischenbereich von dem Stößel 6 zu der Ventilplatte 5 (Anschlagelement) ein Distanzelement 15 vorgesehen ist, das die auf die Ventilplatte 5 wirkende Magnetkraft des Stößels 6 reguliert. Ist nämlich die Ventilplatte 5 aus einem ferromagnetischen Material kann bei einem kontinuierlichen und sich wiederholenden physischen Kontakt mit einem Permanentmagnet ein Magnetfeld in das ferromagnetische Material eingeprägt werden, sodass eine erhöhte Magnetkraft erzeugt wird, die ein Öffnen des Stößels 6 aus seiner Schließstellung entgegensteht. Im ungünstigsten Fall kann dann bei einem eigentlichen Öffnungsvorgang das so eingeprägte Magnetfeld den Stößel 6 an der Ventilplatte 5 anhaften lassen, sodass die gewünschte Öffnung des Ventils nicht mehr erreicht werden kann. Um ein solches Kleben zu verhindern, kann ein Distanzelement 15 zwischen dem Stößel 6 und der Ventilplatte 5 angeordnet sein, das aus einem nicht-magnetisierbaren oder nur schwach magnetisierbaren Material besteht. Das Distanzelement kann dabei eine Scheibenform einnehmen oder über eine Beschichtung bzw. eine Folie an einer Stirnseite der Ventilplatte 5 oder des Stößels 6 umgesetzt sein. Als Material für das Distanzelement bietet sich insbesondere Kunststoff, beispielsweise Polymid an.

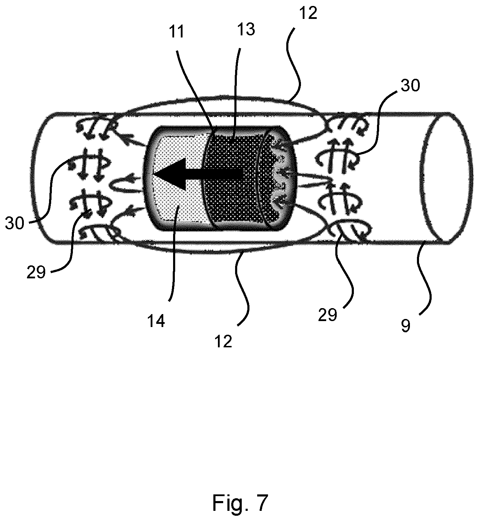

Fig. 7 ist eine skizzenhafte Darstellung zur Erläuterung des zugrundeliegenden Wirkprinzips der Wirbelstrombremse, dass für die vorliegende Erfindung genutzt wird. Man erkennt dabei die Stößelführung 9 und den darin angeordneten Permanentmagnet 11, welcher den Stößel 6 darstellt. Bewegt man nun den Permanentmagnet 11, so führt das Magnetfeld 12 des Permanentmagneten 11 dazu, dass Wirbelströme 29 in der Ventilführung 9 induziert werden. Diese Wirbelströme 29 wiederum bewirken -wie jede Bewegung eines geladenen Teilchens- ein entsprechendes Magnetfeld 30, das dem Magnetfeld des bewegten Permanentmagneten 11 entgegensteht, sodass die Bewegung des Permanentmagneten 11 (dargestellt durch den dicken schwarzen Pfeil) gebremst wird. Dieser Effekt wird bei der Bewegung des Stößels 6 in dem Passivventil genutzt, um eine hohe Geschwindigkeit des Stößels 6 bei einem Anschlagen an einem Anschlag oder einem Gegenanschlag zu verhindern und dadurch das Prellen zu verringern. Ebenfalls verhindert wird dadurch eine ungebührlich hohe mechanische Beanspruchung des Stößels 6, die durch das ungebremste Anschlagen erfolgt. Die Verringerung der hohen Anschlaggeschwindigkeit führt im Ergebnis dazu, dass der Stößel eine längere Haltbarkeit und verbesserte Dauerfestigkeit aufweist, sodass das Gesamtsystem insgesamt robuster ist.

### Bezugszeichenliste:

- 1: Injektor
- 2: Kraftstoffzuleitung
- 3: Aktivventil
- 4: Passivventil
- 5: Ventilplatte
- 6: Stößel / Ventileinsatz
- 7: Anker
- 8: Spule
- 9: Stößelführung / Ventileinsatzführung
- 10: Federelement
- 11: Permanentmagnet
- 12: magnetische Feldlinien
- 13: magnetischer Südpol
- 14: magnetischer Nordpol
- 15: Distanzelement
- 16: Gehäusedeckel
- 17: Ankerfeder
- 18: Polrohr
- 19: Ankergegenstück
- 20: Bypass
- 21: Eisenrückschluss
- 22: Luftspalt
- 23: Ankerbasis
- 24: Ankerführung/Nadelführung
- 25: Dichtelement
- 26: Einblasrohr
- 27: Ventilführung
- 28: Einblaskappe
- A1: Durchgang der Ventilplatte
- A2: Durchgang des Stößels
- A3: Durchgang der Einblaskappe

## Patentansprüche

1. Injektor (1) zum Einspritzen von Kraftstoff, vorzugsweise zum Einblasen eines gasförmigen Kraftstoffs, im Besonderen Wasserstoff, umfassend:
eine Kraftstoffzuleitung (2) zum Einführen eines unter hohen Druck stehenden insbesondere gasförmigen Kraftstoffs,
ein Aktivventil (3), das aktiv schaltbar ist und dazu ausgelegt ist, mindestens einen Durchgang (A1) zu verschließen oder freizugeben, um wahlweise eine Strömungsverbindung von der Kraftstoffzuleitung (2) zu einem Bereich stromabwärts des Aktivventils (3) freizugeben oder zu unterbrechen, und
ein Passivventil (4), das stromabwärts des Aktivventils (3) angeordnet ist und durch stromauf und stromab des Passivventils (4) anliegende unterschiedliche Druckverhältnisse in einen verschließenden oder freigebenden Zustand passiv schaltbar ist, um wahlweise eine Strömungsverbindung von stromaufwärts des Passivventils (4) zu einem Bereich stromabwärts des Passivventils (4) freizugeben oder zu unterbrechen,
**dadurch gekennzeichnet, dass**
ein hin- und herbewegbarer Stößel (6) des Passivventils (4) einen Permanentmagnet umfasst oder ein Permanentmagnet ist, und
eine Stößelführung (9) zum Führen der Hin- und Herbewegung des Stößels (6) vorgesehen ist, die elektrisch leitend und nicht magnetisierbar oder nur schwach magnetisierbar ist oder dass
ein hin- und herbewegbarer Stößel (6) des Passivventils (4) elektrisch leitend und nicht magnetisierbar oder nur schwach magnetisierbar ist, und
eine Stößelführung (9) zum Führen der Hin- und Herbewegung des Stößels (6) vorgesehen ist, die einen Permanentmagnet umfasst oder ein Permanentmagnet ist.

2. Injektor (1) nach dem vorhergehenden Anspruch 1, wobei in einem geschlossenen Zustand des Passivventils (4) der hin- und herbewegbare Stößel (6) des Passivventils (4) mit einem Anschlagelement in Kontakt steht, um mindestens einen Durchgang (A1) des Anschlagelements abzudichten.

3. Injektor (1) nach dem vorhergehenden Anspruch 2, wobei das Anschlagelement eine Ventilplatte (5) ist, wobei die Ventilplatte (5) vorzugsweise von einer ihrer flächigen Seiten durch einen Anker des Aktivventils (3) und von der dazu gegenüberliegenden flächigen Seite von dem Stößel (6) des Passivventils (4) kontaktierbar ist.

4. Injektor (1) nach einem der vorhergehenden Ansprüche 2 oder 3, wobei die das Anschlagelement, insbesondere die Ventilplatte (5) kontaktierende Anschlagfläche des Stößels (6) als Flachdichtung, Kegeldichtung und/oder Kugeldichtung ausgebildet ist.

5. Injektor (1) nach einem der vorhergehenden Ansprüche, wobei der Stößel (6) ein Permanentmagnet ist oder einen Permanentmagnet aufweist, dessen magnetische Pole in Längsrichtung des Injektors (1) versetzt angeordnet sind.

6. Injektor (1) nach einem der vorhergehenden Ansprüche, wobei der Stößel (6) im Querschnitt die Form eines Kreisrings hat, sodass in einer Offenstellung des Passivventils (4) in dessen mittiger Ausnehmung eine Strömung des Kraftstoffs durchführbar ist.

7. Injektor (1) nach einem der vorhergehenden Ansprüche, wobei die Stößelführung (9) den Stößel (6) umfangsseitig umgibt und vorzugsweise sich entlang des gesamten maximal möglichen Hubs des Stößels (6) erstreckt.

8. Injektor (1) nach einem der vorhergehenden Ansprüche, wobei die Stößelführung (9) aus einem anderen Material ist als das Gehäuse des Injektors (1).

9. Injektor (1) nach einem der vorhergehenden Ansprüche, wobei die Stößelführung (9) die Form einer Hülse aufweist, vorzugsweise wobei der Innendurchmesser der Hülse dem Außendurchmesser des Stößels (6) entspricht oder nicht mehr als 10 %, vorzugsweise 5 %, bevorzugterweise 2 % größer als der Außendurchmesser des Stößels (6) ist.

10. Injektor (1) nach einem der vorhergehenden Ansprüche, wobei der Stößel (6) gleitend in der Stößelvorrichtung (9) angeordnet ist und/oder die unterschiedlichen Pole des mit dem Permanentmagneten versehenen Stößels (6) bzw. des als Permanentmagnet ausgebildeten Stößels (6) in Gleitrichtung versetzt zueinander angeordnet sind.

11. Injektor (1) nach einem der vorhergehenden Ansprüche, wobei das Anschlagelement, mit dem der Stößel (6) in einer Schließstellung des Passivventils (4) in Kontakt steht, aus einem nicht-magnetisierbaren oder einem nur schwach magnetisierbaren Material ist.

12. Injektor (1) nach einem der vorhergehenden Ansprüche, wobei zwischen einem Anschlagelement für die Schließstellung, insbesondere einer Ventilplatte (5), und dem Stößel (6) ein Distanzelement (15) vorgesehen ist, um eine maximale Magnetkraft zwischen dem Anschlagelement und dem Stößel (6) einzustellen, wobei vorzugsweise das Distanzelement (15) eine Scheibe, eine Folie oder eine an dem Anschlagelement und/oder dem Stößel (6) angebrachte Beschichtung ist, die aus einem unmagnetischen oder nur schwach magnetischen Material, insbesondere einem Kunststoff, bspw. Polymid, ist.

13. Injektor (1) nach einem der vorhergehenden Ansprüche, wobei die Stößelführung (9) und der Stößel (6) koaxial zueinander angeordnet sind.

14. Injektor (1) nach einem der vorhergehenden Ansprüche, wobei die Stößelführung (9) und der Stößel (6) jeweils rotationssymmetrisch ausgebildet sind und eine gemeinsame Rotationsachse aufweisen.

15. Brennkraftmaschine mit einer Kraftstoffeinspritzung, insbesondere mit einer Gas-Direkteinspritzung, im Besonderen mit einer Wasserstoff-Direkteinspritzung, umfassend einen Injektor (1) nach einem der vorhergehenden Ansprüche 1-14.

## Claims

1. Injector (1) for injecting fuel, preferably for injecting a gaseous fuel, in particular hydrogen, comprising:
a fuel feed line (2) for introducing a fuel, in particular a gaseous fuel, under high pressure,
an active valve (3) which can be actively switched and is configured to close or open at least one passage (A1) in order to selectively open or interrupt a flow connection from the fuel feed line (2) to an area downstream of the active valve (3), and
a passive valve (4) which is arranged downstream of the active valve (3) and can be passively switched into a closing state or releasing state by different pressure ratios applied upstream and downstream of the passive valve (4) in order to optionally release or interrupt a flow connection from upstream of the passive valve (4) to an area downstream of the passive valve (4),
**characterized in that**
a reciprocating tappet (6) of the passive valve (4) comprises a permanent magnet or is a permanent magnet, and
a tappet guide (9) is provided for guiding the reciprocating movement of the tappet (6), which is electrically conductive and non-magnetizable or only weakly magnetizable, or
a reciprocating tappet (6) of the passive valve (4) is electrically conductive and non-magnetizable or only weakly magnetizable, and
a tappet guide (9) is provided for guiding the reciprocating movement of the tappet (6), which comprises a permanent magnet or is a permanent magnet.

2. Injector (1) according to the preceding claim 1, wherein in a closed state of the passive valve (4) the reciprocating tappet (6) of the passive valve (4) is in contact with a stop element in order to seal off at least one passage (A1) of the stop element.

3. Injector (1) according to the preceding claim 2, wherein the stop element is a valve plate (5), wherein the valve plate (5) can preferably be contacted from one of its flat sides by an armature of the active valve (3) and from the opposite flat side by the tappet (6) of the passive valve (4).

4. Injector (1) according to any one of the preceding claims 2 or 3, wherein the stop surface of the tappet (6) contacting the stop element, in particular the valve plate (5), is configured as a flat seal, cone seal and/or ball seal.

5. Injector (1) according to any one of the preceding claims, wherein the tappet (6) is a permanent magnet or comprises a permanent magnet whose magnetic poles are arranged offset in the longitudinal direction of the injector (1).

6. Injector (1) according to any one of the preceding claims, wherein the tappet (6) has the shape of a circular ring in cross-section, so that in an open position of the passive valve (4) a flow of fuel can be passed through in its central recess.

7. Injector (1) according to any one of the preceding claims, wherein the tappet guide (9) surrounds the tappet (6) on the circumferential side and preferably extends along the entire maximum possible stroke of the tappet (6).

8. Injector (1) according to any one of the preceding claims, wherein the tappet guide (9) is made of a different material than the housing of the injector (1).

9. Injector (1) according to any one of the preceding claims, wherein the tappet guide (9) has the shape of a sleeve, preferably wherein the inner diameter of the sleeve corresponds to the outer diameter of the tappet (6) or is not more than 10 %, preferably 5 %, more preferably 2 % larger than the outer diameter of the tappet (6).

10. Injector (1) according to any one of the preceding claims, wherein the tappet (6) is arranged slidingly in the tappet device (9) and/or the different poles of the tappet (6) provided with the permanent magnet or of the tappet (6) configured as a permanent magnet are arranged offset with respect to one another in the sliding direction.

11. Injector (1) according to any one of the preceding claims, wherein the stop element, with which the tappet (6) is in contact in a closed position of the passive valve (4), is made of a non-magnetizable or only weakly magnetizable material.

12. Injector (1) according to any one of the preceding claims, wherein a spacer element (15) is provided between a stop element for the closed position, in particular a valve plate (5), and the tappet (6), in order to set a maximum magnetic force between the stop element and the tappet (6), wherein preferably the spacer element (15) is a disk, a foil or a coating attached to the stop element and/or the tappet (6), which is made of a non-magnetic or only weakly magnetic material, in particular a plastic, for example polyimide.

13. Injector (1) according to any one of the preceding claims, wherein the tappet guide (9) and the tappet (6) are arranged coaxially to each other.

14. Injector (1) according to any one of the preceding claims, wherein the tappet guide (9) and the tappet (6) are each configured to be rotationally symmetrical and have a common axis of rotation.

15. Internal combustion engine with a fuel injection system, in particular with a gas direct injection system, in particular with a hydrogen direct injection system, comprising an injector (1) according to any one of the preceding claims 1-14.

## Revendications

1. Injecteur (1) pour l'injection de carburant, de préférence pour l'injection d'un carburant gazeux, notamment de l'hydrogène, comprenant :
une conduite d'alimentation en carburant (2) pour introduire un carburant sous haute pression, notamment un carburant gazeux,
une soupape active (3), qui peut être commutée activement et qui est conçue pour fermer ou libérer au moins un passage (A1) afin de libérer ou d'interrompre sélectivement une liaison d'écoulement de la conduite d'alimentation en carburant (2) vers une zone en aval de la soupape active (3), et
une soupape passive (4), qui est agencée en aval de la soupape active (3) et qui peut être commutée passivement dans un état de fermeture ou de libération par des rapports de pression différents appliqués en amont et en aval de la soupape passive (4), afin de libérer ou d'interrompre sélectivement une liaison d'écoulement depuis l'amont de la soupape passive (4) vers une zone en aval de la soupape passive (4),
**caractérisé en ce que**
un poussoir (6) mobile en va-et-vient de la soupape passive (4) comprend un aimant permanent ou est un aimant permanent, et
il est prévu un guide de poussoir (9) pour guider le mouvement de va-et-vient du poussoir (6), qui est électriquement conducteur et non magnétisable ou seulement faiblement magnétisable, ou **en ce que**
un poussoir (6) mobile en va-et-vient de la soupape passive (4) est électriquement conducteur et non magnétisable ou seulement faiblement magnétisable, et
il est prévu un guide de poussoir (9) pour guider le mouvement de va-et-vient du poussoir (6), qui comprend un aimant permanent ou est un aimant permanent.

2. Injecteur (1) selon la revendication 1 précédente, dans lequel, dans un état fermé de la soupape passive (4), le poussoir (6) mobile en va-et-vient de la soupape passive (4) est en contact avec un élément de butée afin d'étanchéifier au moins un passage (A1) de l'élément de butée.

3. Injecteur (1) selon la revendication 2 précédente, dans lequel l'élément de butée est une plaque de soupape (5), la plaque de soupape (5) pouvant venir en contact de préférence par l'un de ses côtés plans avec un induit de la soupape active (3) et par le côté plan opposé à celui-ci avec le poussoir (6) de la soupape passive (4).

4. Injecteur (1) selon l'une quelconque des revendications 2 ou 3 précédentes, dans lequel la surface de butée du poussoir (6) venant en contact avec l'élément de butée, notamment la plaque de soupape (5), est réalisée sous forme de joint plat, de joint conique et/ou de joint sphérique.

5. Injecteur (1) selon l'une quelconque des revendications précédentes, dans lequel le poussoir (6) est un aimant permanent ou présente un aimant permanent dont les pôles magnétiques sont agencés en décalage dans la direction longitudinale de l'injecteur (1).

6. Injecteur (1) selon l'une quelconque des revendications précédentes, dans lequel le poussoir (6) a, en section transversale, la forme d'un anneau circulaire, de telle sorte que, dans une position ouverte de la soupape passive (4), un écoulement du carburant peut être réalisé dans son évidement central.

7. Injecteur (1) selon l'une quelconque des revendications précédentes, dans lequel le guide de poussoir (9) entoure le poussoir (6) de manière périphérique et s'étend de préférence le long de toute la course maximale possible du poussoir (6).

8. Injecteur (1) selon l'une quelconque des revendications précédentes, dans lequel le guide de poussoir (9) est réalisé dans un matériau différent de celui du boîtier de l'injecteur (1).

9. Injecteur (1) selon l'une quelconque des revendications précédentes, dans lequel le guide de poussoir (9) présente la forme d'un manchon, de préférence dans lequel le diamètre intérieur du manchon correspond au diamètre extérieur du poussoir (6) ou n'est pas supérieur de plus de 10 %, de préférence de 5 %, de manière davantage préférée de 2 % au diamètre extérieur du poussoir (6).

10. Injecteur (1) selon l'une quelconque des revendications précédentes, dans lequel le poussoir (6) est agencé de manière coulissante dans le dispositif à poussoir (9) et/ou les différents pôles du poussoir (6) pourvu de l'aimant permanent ou du poussoir (6) réalisé sous forme d'aimant permanent sont agencés en décalage les uns par rapport aux autres dans la direction de coulissement.

11. Injecteur (1) selon l'une quelconque des revendications précédentes, dans lequel l'élément de butée avec lequel le poussoir (6) est en contact dans une position de fermeture de la soupape passive (4) est en un matériau non magnétisable ou seulement faiblement magnétisable.

12. Injecteur (1) selon l'une quelconque des revendications précédentes, dans lequel un élément d'écartement (15) est prévu entre un élément de butée pour la position de fermeture, notamment une plaque de soupape (5), et le poussoir (6), afin d'ajuster une force magnétique maximale entre l'élément de butée et le poussoir (6), l'élément d'écartement (15) étant de préférence un disque, un film ou un revêtement appliqué sur l'élément de butée et/ou le poussoir (6), qui est constitué d'un matériau non magnétique ou seulement faiblement magnétique, notamment d'une matière plastique, par exemple le polyamide.

13. Injecteur (1) selon l'une quelconque des revendications précédentes, dans lequel le guide de poussoir (9) et le poussoir (6) sont agencés coaxialement l'un à l'autre.

14. Injecteur (1) selon l'une quelconque des revendications précédentes, dans lequel le guide de poussoir (9) et le poussoir (6) sont chacun réalisés avec une symétrie de révolution et présentent un axe de rotation commun.

15. Moteur à combustion interne avec une injection de carburant, notamment avec une injection directe de gaz, notamment avec une injection directe d'hydrogène, comprenant un injecteur (1) selon l'une quelconque des revendications 1 à 14 précédentes.
